(19) Europäisches Patentamt
European Patent Office
Office européen des brevets

(11) Publication number: 0 222 610
A2

(12) # EUROPEAN PATENT APPLICATION

(21) Application number: 86308727.6

(22) Date of filing: 10.11.86

(51) Int. Cl.4: B 32 B 27/12
B 63 H 9/06

(30) Priority: 13.11.85 JP 252630/85
13.12.85 JP 279286/85

(43) Date of publication of application:
20.05.87 Bulletin 87/21

(84) Designated Contracting States:
CH DE FR GB LI NL

(71) Applicant: TEIJIN LIMITED
11 Minami Honmachi 1-chome Higashi-ku
Osaka-shi Osaka-fu(JP)

(72) Inventor: Takahashi, Shigeru
3-8-12, Hashinouchi
Ibaraki-shi Osaka(JP)

(72) Inventor: Takabayashi, Fumiki
2-30-1, Matsugaoka
Takatsuki-shi Osaka(JP)

(72) Inventor: Tanaka, Kunio
9-319, Hozumidai
Ibaraki-shi Osaka(JP)

(74) Representative: Arthur, Bryan Edward et al,
Withers & Rogers 4 Dyer's Buildings Holborn
London EC1N 2JT(GB)

(54) **Laminate sheet material for sails and process for producing the same.**

(57) A laminate sheet material useful as sail cloth and having a small elongation of 1.5% or less under a tension of 45.36 kg/5 cm, a high peeling strength of 2.0 kg/3 cm or more and a high seam strength of 25 kg/2.54 cm or more, comprises a substrate fabric comprising 40 to 60% by weight of principal yarns and 3 to 40% by weight of low elongation yarns comprising high mechanical strength, high elastic modulus fibers and arranged in at least one direction, which substrate fabric has been dry heat treated at a temperature of 50°C to 110°C below the melting point of the principal yarns under a tension of 0.3 g/d in the direction in which the low elongation yarns are arranged, and has an elongation of 3.0% or less determined under a tensile load of 45.36 kg/5 cm; and at least one thermoplastic resin film bonded to the substrate fabric.

Fig. 1

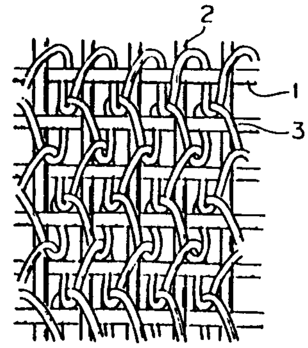

# LAMINATE SHEET MATERIAL FOR SAILS AND PROCESS FOR PRODUCING THE SAME

## BACKGROUND OF THE INVENTION

### (1) Field of the Invention

The present invention relates to a laminate sheet material useful for sails of wind surfing boards or sail boats.

### (2) Description of the Related Art

It is known that a laminate sheet comprising a substrate fabric and at least one covering film bonded to at least one surface of the substrate fabric is useful for sails of wind surfing boards and sail boats.

For example, Japanese Unexamined Patent Publication (Kokai) No. 58-222847 discloses a sail cloth comprising a biaxially stretched polyester film and at least one fabric bonded to at least one surface of the polyester film through a thermoplastic polyesterether copolymer-bonding layer.

Also, Japanese Unexamined Utility Model Publication (Kokai) No. 59-187,436 discloses a sail cloth consisting of a laminate sheet comprising a plain weave fabric composed of polyester multifilament warp and weft yarns and a polyester film bonded to the fabric with a polyurethane resin-based bonding material; the plain weave fabric having elongations of 3% or less in all the directions of the warp, the weft, and the bias of the fabric, determined under a tensile load of 18 kg per 5 cm width of the fabric, and the laminate sheet having a peeling strength of 2 kg or more per 3 cm width of the laminate sheet.

Further, Japanese Unexamined Utility Model Publication No. 60-125,118 discloses a sail cloth comprising a knitted-like substrate fabric and a biaxially stretched polyester film bonded to the substrate fabric, a portion or the entirety of the

substrate fabric being composed of dope-colored, substantially non-twisted polyester multifilament yarns.

The above-mentioned conventional substrate fabrics are composed of ordinary thermoplastic polymer fibers, for example, polyester fibers, and can be scoured, dyed and finished by ordinary processes.

It is also known that fabric-resinous film laminate sheets having a high resistance to elongation are very useful as sail cloth.

Several attempts have been made to produce the high elongation-resistant laminate sheet, as shown below,

(1) In the production of a substrate fabric for sail cloth, yarns having an increased thickness are arranged in a direction in which the sail cloth is required to exhibit a reduced elongation.

(2) The substrate fabric is heat-treated under a tension applied in a direction in which the sail cloth is required to exhibit an increased elongation resistance, to release residual strain in the yarns derived from stretch applied to the yarns during the weaving or knitting procedure and to dimensionally stabilize the substrate fabric.

(3) The substrate fabric is formed in a low density sheeting structure to reduce the shrinkage of the yarns during the weaving or knitting procedure.

However, the above-mentioned conventional sail cloths have at least one of the following disadvantages.

(1) The substrate fabric has an excessively large weight and, therefore, the resultant sail cloth is excessively heavy. Such a heavy sail cloth causes difficulties during sailing operations.

(2) The substrate fabric having a low density structure exhibits a large elongation in the bias direction, and the resultant sail cloth exhibits a decreased dimensional stability.

(3) When repeatedly stretched, the sail cloth is elongated to an extent that the elongated sail cloth

cannot elastically shrink to the original state and exhibits a very poor dimensional stability.

(4) When repeatedly used and subjected to a strong force, for example, strong wind force, the yarns in the substrate fabric exhibit a reduced restriction in movement of the yarn from each other and, therefore, the sail cloth exhibits a poor seam strength.

Accordingly, there is a strong desire for the provision of a new type of laminate sheet material having an increased resistance to elongation and an enhanced dimensional stability and durability, for use as a sail cloth.

SUMMARY OF THE INVENTION

An object of the present invention is to provide a laminate sheet material useful for a sail cloth having an enhanced dimensional stability and durability, and a process for producing the same.

Another object of the present invention is to provide a laminate sheet material for a sail cloth having a decreased elongation in the directions of the warp, the weft, and the bias of the sheet material, and an enhanced peeling strength and seam strength, and a process for producing the same.

The above-mentioned objects are attained by the laminate sheet material and the process of the present invention.

The laminate sheet material of the present invention comprises a substrate fabric comprising 60 to 97% by weight of principal yarns and 3 to 40% by weight of low elongation yarns comprising high mechanical strength, high elastic modulus fibers and arranged in at least one direction, the substrate fabric having an elongation of 3.0% or less determined under a tensile load of 45.36 kg per 5 cm width thereof in at least one direction; and at least one thermoplastic resin film bonded to at least one surface of the substrate fabric, which laminate sheet material has an elongation of 1.5% or less determined

under a tensile load of 45.36 kg per 5 cm width thereof, a peeling strength of 2.0 kg or more per 3 cm width thereof, and a seam strength of 25 kg or more per 2.54 cm width thereof. The process of the present invention comprises the steps of:

dry heat-treating a substrate fabric comprising 60% to 97% by weight of principal yarns and 3 to 40% by weight of low elongation yarns comprising high mechanical strength, high elastic modulus fibers arranged in at least one direction, at a temperature of 50°C to 110°C below the melting point of the principal yarns under a tension of 0.3 g/denier in the direction in which the reinforcing yarns are arranged; and

bonding at least one thermoplastic resin film to at least one surface of the substrate fabric.

BRIEF DESCRIPTION OF THE DRAWINGS

Figure 1 shows a structure of an embodiment of the substrate fabric usable for the laminate sheet material of the present invention; and,

Fig. 2 shows a structure of another embodiment of the substrate fabric usable for the laminate sheet material of the present invention.

DESCRIPTION OF THE PREFERRED EMBODIMENTS

In the laminate sheet material of the present invention, it is essential that the substrate fabric contains 3 to 40% by weight of low elongation yarns comprising specific high mechanical strength, high elastic modulus fibers or filaments and has an elongation of 3.0% or less under a tensile load of 45.36 kg per 5 cm width thereof in at least one direction.

The high mechanical strength, high elastic modulus fibers usable for the present invention preferably have a high heat resistance. The heat resistance of the fibers is represented herein by a temperature at which the fiber is melted or the essential properties of the fiber are deteriorated. Preferably, the high mechanical strength, high elastic modulus fibers have a heat

resistance of 210°C or more. For example, a 3,4'-diaminodiphenyl- ether-copolymerized poly-p-phenyleneterephthalamide fiber has a heat resistance of about 500°C.

The high mechanical strength, high elastic modulus fibers or filaments, hereinafter, referred to as high modulus fiber, include high strength aromatic polyamide fibers, high strength polyethylene fibers, high strength polyvinyl alcohol fibers, high strength polyacrylonitrile fibers, high strength polyimide fibers, carbon fibers, and glass fibers.

The aromatic polyamide fibers usable for the present invention include poly-p-phenyleneterephthalamide fibers (which are available under the trademark Kevler, and are produced by Du Pont) and 3,4'-diaminodiphenylether-copolymerized poly-p-phenyleneterephthal- amide fibers (which are available under the trademark "TECHNORA" and are made by Teijin Ltd.)

The high strength polyethylene fibers are available under the trademark Spectrum 900, and are made by Allied Corp, or under a trademark Techmilon, and are made by Mitsui Petrochemical Industrial Co..

The high strength polyvinyl alcohol fibers usable for the present invention are selected from polyvinyl alcohol fibers, disclosed in, for example, Japanese Unexamined Patent Publication (Kokai) No. 60-126,312, and consisting of a polyvinyl alcohol resin having a degree of polymerization of 1500 or more, a tensile strength of 12 g/denier or more, and an elastic modulus of 250 g/denier or more.

The high strength polyimide fibers usable for the present invention are selected from those disclosed in, for example, Japanese Unexamined Patent Publication No. 56-159314, having 90 molar% or more of recurring units of the formula:

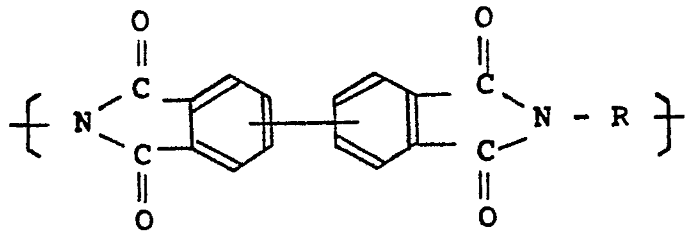

wherein R represents a divalent aromatic residue which is free from amino radical and has been derived from an aromatic diamine.

The carbon fibers usable for the present invention are selected from those produced by sintering polyacrylic fibers or pitch fibers.

The high modulus fibers usable for the present invention are in the form of spun yarns, multifilament yarns, slit yarns or tape yarns.

The high strength fiber yarns preferably consist of individual fibers or filaments having a denier of from 0.5 to 250, and have a total denier of from 50 to 5000.

The high modulus fiber yarns are arranged in at least one direction, for example, the warp direction, weft direction or bias direction, in an amount of 3 to 40% by weight among the principal yarns. Preferably, the high modulus fiber yarns are arranged spaced from each other in a density of 1 to 9 yarns/3 cm among the principal yarns.

Where the substrate fabric is a knitted fabric, the high modulus fiber yarns should be contained therein in an amount of 3 to 40% by weight. Where the substrate fabric is required to have a reduced elongation in the weft direction, the high modulus fiber yarns are inserted as weft yarns, preferably at a density of 1 to 9 yarns/3 cm, into the woven fabric, knitted fabric or weft-inserted knitted fabric.

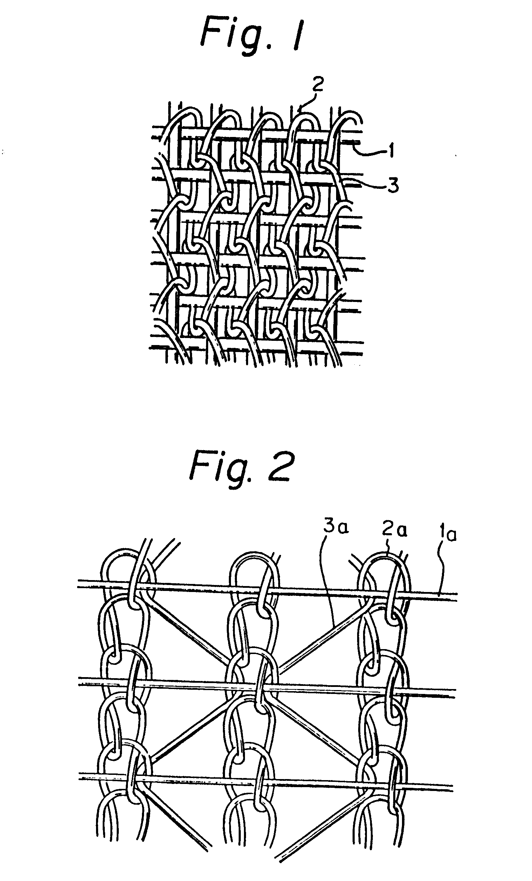

In the ordinary woven or knitted fabric, it is very difficult to reduce the elongation of the fabric in the bias direction. But, this elongation of the fabric in the bias direction can be reduced by arranging the high

modulus fiber yarns in the bias direction. For example, as shown in Fig. 1, a three component yarn fabric is composed of a weft 1, a warp 2, and entwining yarns 3 entwining at the intersections of the wefts with the warps. The entwining yarns 3 contain the high modulus fiber yarns in an amount of 3 to 40% based on the weight of the substrate fabric.

Referring to Fig. 2, a three component yarns knitted fabric is composed of, wale yarns 2a, weft yarns 1a inserted in the wale yarns 2a, and entwining yarns 3a extending in a zigzag manner and entwining with the wale yarns 2a. The entwining yarns 3a consist of the high modulus fiber yarns.

When the substrate fabric is required to have a reduced elongation in two or three of the warp, weft, and bias directions, the high modulus fiber yarns are distributed in the required directions.

A conventional polyethylene terephthalate fiber fabric having a total denier of 16500/5 cm or 75000/5 cm usually exhibits an elongation of 9.75% or 4.8% under a tensile load of 45.36 kg/5 cm. That is, it was not possible to find a polyethylene terephthalate fiber fabric having a small elongation of 3.0% or less under a tensile load of 45.36 kg/5 cm. Accordingly, in order to provide a new substrate fabric having a small elongation of 3.0% or less under a tensile load of 45.36 kg/5 cm, it is necessary to arrange the high modulus fiber yarns in an amount of 3 to 40% by weight in at least one direction in the substrate fabric.

When the content of the high modulus fiber yarns is less than 3% by weight, it is difficult to obtain a substrate fabric having a desired elongation of 3.0% or less. When the content of the high modulus fiber yarns is more than 40% by weight, it is very difficult to firmly bond the resultant substrate fabric to the thermoplastic resin film with a conventional bonding agent. This is because there is no bonding agent which

is highly effective for bonding the high modulus fiber yarns. That is, the bonding property of the substrate fabric decreases with an increase in the content of the high modulus fiber yarns in the substrate fabric.

Preferably, the high modulus fiber yarns are distributed in a density of 1 to 9 yarns/3 cm width of the substrate fabric. When the distribution density of the high modulus fiber yarns is less than 1 yarn/3 cm, the resultant laminate material sometimes exhibits an unsatisfactory large elongation.

Where a substrate fabric contains the high modulus fiber yarns in a density of 9 yarns/3 cm and in a content of 31.6% by weight, and the resultant laminate sheet material exhibits an elongation of 1.75%, a corresponding laminate sheet material wherein the substrate fabric consists of the high modulus fiber yarns alone, exhibits an elongation of 1.52%. That is, an increase in the distribution density of the high modulus fiber yarns above 9 yarns/3 cm results in a very small contribution to a decrease in the elongation of the laminate sheet material. Also, the substrate fabric composed of the high modulus fiber yarns alone exhibits a poor bonding property.

In the substrate fabric of the present invention, the high modulus fibers must be in the form of yarns. Also, preferably the high modulus fiber yarns are evenly distributed in the substrate fabric.

The principal yarns in the substrate fabric are selected from ordinary thermoplastic synthetic fiber yarns, for example, polyester, aliphatic polyamide, aromatic polyamide, and polyolefin multifilament yarns and spun yarns; natural fiber yarns, for example, cotton, ramie, hemp and jute fiber yarns; metal compound fiber yarns, for example, copper-aluminum compound fiber yarns; and inorganic fiber yarns, for example, carbon fiber yarns and glass fiber yarns.

Substrate fabrics for sails are required to have a

light weight, low elongation, low hygroscopicity, high weather resistance, and a high durability. In view of the above-mentioned requirements, the principal yarns for the substrate fabric preferably consist of synthetic thermoplastic fibers or filaments, especially polyester fibers or filaments, more especially polyethylene terephthalate fibers or filaments. Preferably, the principal yarns are composed of individual fibers or filaments having a denier of 0.5 to 250, and have a total denier of from 50 to 5,000.

Preferably, the substrate fabric has a weight of from 20 to 500 $g/m^2$ and warp and weft densities of one yarn/cm or more.

When a substrate fabric consisting of a low density woven fabric having warp and weft densities of one yarns/2 cm is used, the resultant conventional laminate sheet material exhibits a poor seam strength of 15.3 kg/2.54 cm. That is, when a strong wind force is applied to the laminate sheet material, the laminate sheet material is easily broken at the seam. Usually, the laminate sheet material to be used for sails must have a seam strength of 25 kg/2.54 cm or more at a seam portion of two pieces of the laminate sheet material or of a piece of the laminate sheet material joind with a piece of another sheet material, for example, a polyvinyl chloride film having a thickness of 500 μm.

The seam strength of the laminate sheet material varies depending on the yarn density of the substrate fabric and on the bonding strength of the substrate fabric to the thermoplastic resin film. As described above, the conventional substrate fabric having warp and weft densities of 1 yarn/2 cm has an unsatisfactory seam strength. Therefore, preferably the substrate fabric has a yarn density of at least one yarn/cm. Also, preferably the substrate fabric has a satisfactory bonding property to the thermoplastic resin film. For example, when a substrate fabric composed of aromatic

polyamide yarns alone is bonded to a biaxially stretched polyester film having a thickness of 25 μm, the resultant laminate material exhibits an unsatisfactory peeling strength of 1.45 kg/3 cm and a poor seam strength of 19.4 kg/2.54 cm.

The laminate sheet material of the present invention must exhibit a peeling strength of 2.0 kg/3 cm or more and a seam strength of 25 kg/2.54 cm or more.

The substrate fabric may be used without scouring and dyeing. Alternatively, the substrate fabric may be scoured and, if necessary, dyed or printed and/or subjected to a water proofing or water-repellent treatment.

When a substrate fabric which has been scoured and dyed or printed in a desired color and/or pattern is coated with a transparent thermoplastic resin film, the resultant laminate sheet material can exhibit any desired color and/or pattern.

When a waterproofing or water-repellent treatment is applied, undesirable penetration of water into the substrate fabric in the resultant laminate sheet material is prevented when it is immersed in water. This is effective for protecting the substrate fabric from undesirable fungus damage and color fading. Also, this is effective for preventing a decrease in the peeling strength of the substrate fabric from the coating with the lapse of time.

In the laminate sheet material of the present invention, at least one thermoplastic resin film is bonded to at least one surface of the substrate fabric. For this bonding, a bonding agent is preferably used. Preferably, the bonding agent is applied in a dry thickness of 5 to 200 μm. When the thickness is less than 5 μm, the peeling strength of the substrate fabric layer from the thermoplastic resin film layer in the resultant laminate sheet material is sometimes unsatisfactory. When the thickness of the bonding agent

layer is more than 200 μm, the resultant laminate sheet material sometimes is excessively heavy.

The bonding agent can be selected from ordinarily available heat-bonding thermoplastic resins comprising at least one member selected from, for example, polyurethane resins, polyvinyl acetate resins, polyacrylic ester resins, polyamide resins and polyester-copolymer resins.

The thermoplastic resin film usable for the present invention preferably has a thickness of from 10 to 200 μm. When the thickness is less than 10 μm, it is sometimes difficult to obtain a laminate sheet material having a satisfactorily small elongation, especially in the bias direction of the sheet material. When the thickness is more than 200 μm, the resultant laminate sheet material sometimes exhibits an undesirable heavy weight and poor flexibility.

The thermoplastic resin film usable for the present invention preferably comprises at least one member selected from polyvinyl chloride resins, polyvinylidene chloride resin, polyacrylic ester resins, polyethylene resins, polyester resins and polyamide resins. In view of a low elongation and a light weight necessary for sails, a biaxially stretched polyethylene terephthalate film is most preferable for the present invention.

Usually, the substrate fabric is scoured, pre-heat set, dyed, and/or finished. When the principal yarns consist of polyester fibers, the substrate fabric is scoured by immersing the fabric in an aqueous scouring liquid at a temperature of 60°C to 100°C; or by impregnating the fabric with a scouring liquid and then heating the impregnated fabric in a steam medium; is preheat-treated at a temperature of 160°C to 200°C; is dyed by immersing the fabric in an aqueous dyeing liquid at a temperature of 120°C to 135°C, or by impregnating the fabric with a dyeing liquid and then drying and dry heating the impregnated fabric at a temperature of 100°C

to 210°C; and is finished at a temperature of 150°C to 200°C.

Usually, the above-mentioned treatments applied to the substrate fabric result in a larger shrinkage of the principal yarns than that of the low elongation high modulus fiber yarns in the substrate fabric.

For example, when a substrate fabric consisting of polyethylene terephthalate filament principal yarns and poly-p-phenylene- terephthalamide filament low elongation yarns is wet-treated in boiling water at a temperature of 100°C or dry heated at a temperature of 180°C, the difference in shrinkage between the polyethylene terephthalate filament yarns and the poly-p-phenylene-terephthalamide filament yarns is in the range of from 3.5% to 11.0% or in the range of from 5.0% to 16.5%. Also, a wet heating at a temperature of 135°C or a dry heating at a temperature of 210°C results in a shrinkage difference of 2.5% to 20.5% or 2.5% to 16.5%. Accordingly, in the resultant heated substrate fabric, the low elongation high modulus fiber yarns are in a relaxed or loosened condition. If the loosened low elongation yarn-containing substrate fabric is used, the resultant laminate sheet material exhibits a small resistance to elongation.

Accordingly, in the process of the present invention, the substrate fabric is heat treated at a temperature of 50°C to 110°C below the melting point of the principal yarns under a tension of 0.3 g/d in the direction in which the low elongation yarns are arranged. Usually, the heat treatment is carried out at the above-mentioned temperature, for example, 180°C to 200°C, for 15 seconds to 5 minutes.

When the low elongation yarns consist of high strength polyethylene fibers which have a low melting point, preferably the substrate fabric is scoured or heat treated at as low a temperature as possible, or used without scouring or heat-treating. Also, preferably

the substrate fabric contains a treating agent, for example, a sizing agent or oiling agent, in as small an amount as possible.

When the heat-treatment for the substrate fabric is carried out at a temperature more than 110°C below the melting point of the principal yarns, while the substrate fabric is stretched under tension, the dimensional stability of the principal yarns in the resultant heat-treated substrate fabric is unsatisfactory. That is, when the tension applied to the substrate fabric is removed, the principal yarns shrink to the original length thereof and, therefore, the low elongation yarns are loosened.

When the heat treatment is applied to the substrate fabric at a temperature less than 50°C below the melting point of the principal yarns, sometimes the substrate fabric is discolored yellow, the mechanical strength of the principal yarns is decreased or the color fastness of the dyed substrate fabric is deteriorated.

When the tension in the heat-treatment is applied at a level less than 0.3 g/d to the substrate fabric, it is difficult to prevent the undesirable loosening of the low elongation yarns. Usually, the heat-treatment is carried out by means of a tenter in which the fabric can be continuously stretched in the warp and weft directions. The tenter is preferably selected from clip tenters or clip pin tenters which are effective for evenly stretching the fabric.

The heat treatment is preferably carried out just before the bonding procedure of the substrate fabric to the thermoplastic resin film. If the heat-treated substrate fabric is stored for a long time before the bonding procedure, it is necessary to keep the substrate fabric under enough tension to prevent the loosening of the low elongation high modulus fiber yarns.

If the heat-treated substrate fabric is wet or dry treated in a relaxed condition, for example, dyed in a

dyeing liquid, before the bonding procedure, the low elongation high modulus fiber yarns will be loosened.

The laminate sheet material of the present invention exhibits a very low degree of elongation in the direction in which the low elongation yarns are arranged. Also, the change in elongation with the lapse of time is very small. Therefore, the laminate sheet material has an excellent dimensional stability and durability. When the laminate sheet material of the present invention is used for wind surfing equipment or sail boats, the resultant sail exhibits an excellent dimensional stability and stable form even at a high speed under a strong wind force.

Also, the sail can be used for a long time without breakage and elongation.

Further, the peeling strength of the substrate sheet from the thermoplastic resin film layer in the sail of the present invention is higher than that of a comparative sail, wherein the substrate sheet is composed of high modulus fiber yarns alone.

Furthermore, the laminate sheet material of the present invention exhibits an excellent seam strength even if a reinforcing tape is not applied to the seam.

The present invention will be further explained by way of specific examples, which, however, are representative and do not restrict the scope of the present invention in any way.

In the examples, the following tests are carried out.

(1) Tensile strength and ultimate elongation

A sheet specimen having a width of 5 cm and a length of 30 cm was subjected to a tensile test by means of a tensile tester made by Toyo Goldwine Co. to determine a tensile strength and elongation at break of the specimen.

The measurement was repeated for three specimens in each of the warp, weft, and bias directions

under the following conditions.

Distance between grippers applied to ends of specimen : 200 mm

Stretching speed: 200 mm/min.

Chart speed : 200 mm/min.

(2) Elongation under a constant tensile load

A sheet specimen having a width of 5 cm and a length of 30 cm was stretched under a predetermined constant tensile load, for example, 4.536 kg, 9.072 kg or 18.144 kg, under the following conditions, and the elongation of the specimen was determined.

Distance between grippers applied to ends of specimen : 200 mm

Stretching speed : 200 mm/min.

Chart speed : 500 mm/min.

(3) Durability

A sheet specimen having a width of 30 cm and a length of 40 cm was laundered at a liquor ratio of 1:100 for 90 minutes under a strong laundering condition by means of a home laundry machine.

(4) Peeling strength

A specimen having a width of 3 cm and a length of 15 cm was subjected to a peeling test in such a manner that, at one end portion of the specimen, a thermoplastic resin film layer was peeled off from a substrate fabric layer and the peeled film layer portion and the peeled substrate fabric layer portion were gripped by grippers of the tensile tester and peeled off from each other under the following conditions.

Distance between grippers: 30 mm

Peeling speed : 50 mm/min.

Chart speed : 50 mm/min.

(5) Seam strength

An end portion in a length of 3 cm of a sheet specimen having a width of 10 cm was superimposed on an end portion of another sheet specimen. A middle portion of the superimposed portion of the specimens was sewn by

a zigzag sewing machine (Type MGF-60, made by Pegasus Co.) under the following conditions.

Sewing yarn : Spun polyester fiber yarn, 20 count

Zigzag stitch: 7 stitches/4 cm, Height of zigzag stitches: 4.5 mm

Sewing needle: Dp x 5 #18 (Organo Co.)

The ends of the sewed specimens were gripped by grippers having a width of 2.54 cm of the tensile tester and were stretched until the seam was broken under the following conditions.

Distance between grippers: 100 mm

Stretching speed : 100 mm/min.

Chart speed : 100 mm/min.

Example 1

A plain weave fabric was produced from warps consisting of principal yarns which consisted of polyethylene terephthalate multifilaments having an individual filament denier of 5 and a melting point of 258°C and yarn count of 125 denier/24 filaments, and low elongation yarns which consisted of 3,4'-diaminodiphenyl-ether-copolymerized poly-p-phenyleneterephthalamide multifilaments made by Teijin Ltd., and having an individual filament denier of 1.5 and a heat resistance of 400°C, had a total denier of 1000, and was distributed in a distribution density of one yarn/cm among the principal yarns, in a warp density of 64 yarns/2.54 cm, and wefts consisting of the same principal yarns as mentioned above in a weft density of 50 yarns/2.54 cm.

In the resultant fabric, the low elongation yarns were in a content of 15.1% by weight.

The plain weave fabric was scoured by an ordinary method to remove any oiling agent and sizing agent on the yarns.

The fabric was heat treated at a temperature of 190°C for 30 seconds while the fabric was stretched at

an elongation of 10% under a tension of 1.2 g/d in the warp direction to prevent an undesirable loosening of the low elongation yarns.

The heat-treated fabric was used as a substrate fabric.

A surface of a biaxially stretched polyethylene terephthalate film having a thickness of 50 μm was coated with a polyurethane bonding agent (Trademark: Nippolan 5030, made by Nippon Polyurethane Co.) to a thickness of 30 μm by means of a comma doctor. The bonding agent layer was dried at a temperature of 120°C for one minute. The dried bonding agent layer on the film was brought into contact with a surface of the substrate fabric and the resultant laminate was continuously heat-pressed at a temperature of 120°C, under a pressure of 3.0 $kg/cm^2$, and at a speed of 15 m/min, by means of a pair of nip rollers.

The resultant laminate sheet material had the properties as shown in Tables 1, 2 and 3. Especially, the laminate sheet material exhibited a very small elongation in the warp direction and this property was maintained even after laundering.

Example 2

A checked pattern plain weave substrate fabric was produced from warps consisting of principal yarns which consisted of polyethylene terephthalate multifilaments having an individual filament denier of 3 and had a total denier of 150 and the same low elongation yarns as described in Example 1, distributed in a distribution density of one yarn/2 cm among the principal yarns, in a warp density of 55 yarns/2.54 cm, and wefts consisting of the same principal yarns as mentioned above and the same low elongation yarns as described in Example 1, distributed in a distribution density of one yarn/2 cm among the principal yarns, in a weft density of 50 yarns/2.54 cm.

The resultant fabric contained the low elongation

yarns in a content of 14.8% by weight.

The fabric was scoured and heat treated in the same manner as mentioned in Example 1, except that, in the heat treatment, the tension was applied in the warp and weft directions.

The same bonding agent as described in Example 1 was coated in a thickness of 25 μm on a surface of the same polyethylene terephthalate film as described in Example 1 by a comma doctor method. The coated bonding agent layer on the film was dried at 120°C for one minute and then brought into contact with a surface of the substrate fabric, while the resultant laminate was continuously heat-pressed by means of a pair of nip rollers at a roller surface temperature of 120°C under a pressure of 3.3 $kg/cm^2$ and at a speed of 15 m/min.

The resultant laminate sheet material exhibited the properties as shown in Tables 1, 2, and 3. Particularly, the laminate sheet material had very low elongations in the warp and weft directions and excellent durability in elongation for laundering.

Example 3

A plain weave substrate fabric was produced from warps consisting of principal yarns which consisted of polyethylene terephthalate filaments having an individual filament denier of 2.1 and had a total denier of 75, and wefts consisting of the same principal yarns as mentioned above and low elongation yarns which consisted of polyethylene filaments made by Mitsui Petrochemical Co. under the trademark Temicron, and having an individual filament denier of 8.3, had a total denier of 500 and were distributed in a distribution density of one yarn/cm among the principal yarns, in a weft density of 90 yarns/2.54 cm.

The resultant fabric contained the low elongation yarns in a content of 16.9% by weight.

The substrate fabric was coated by the same polyethylene terephthalate film as mentioned in Example 1

in the same manner as mentioned in Example 1, except that the coated bonding agent layer was formed in a thickness of 28 μm and dried at a temperature of 100°C for 2 minutes, and the heat-pressing procedure was carried out at a roller surface temperature of 110°C under a pressure of 3.5 $kg/cm^2$ and a roller speed of 10 m/min.

The test results are shown in Tables 1, 2 and 3.

Example 4

A special weave-knitted substrate fabric as shown in Fig. 2 was produced from warps consisting of principal yarns which consisted of polyethylene terephthalate filaments having an individual filament denier of 3 and had a total denier of 150, in a warp density of 32 yarns/2.54 cm, wefts consisting of principal yarns which consisted of polyethylene terephthalate filaments having an individual filament denier of 5 and had a total denier of 500 and the same low elongation yarns as mentioned in Example 1 distributed in a distribution density of 2 yarns/cm among the principal yarns, in a weft density of 6 yarns/2.54 cm, and entwining yarns consisting of the same low elongation yarns as described in Example 1 and entwined around the intersects of the warps with the wefts.

The resultant fabric contained the low elongation yarns in a content of 31.8% by weight.

The fabric was scoured in an aqueous solution of 2 g/l of a scouring agent (Trademark: Scourol 400, made by Kao Soap Co.) at a temperature of 60°C for 20 minutes to remove knitting oil. The scoured fabric was dyed with an aqueous dyeing liquid having the following composition at a temperature of 130°C for 45 minutes.

| | |
|---|---|
| Palanil Blue R (Trademark, BASF) | 1% owf |
| Disper VG (Trademark, Meisei Chemical Co.) | 1 g/l |
| $CH_3COOH$ | |
| pH : 4 | |
| Liquor ratio: 30 | |

The dyed fabric was dried at a temperature of 120°C for 2 minutes and then heat-set at a temperature of 180°C for one minute, while stretching the dyed fabric to the original dimensions thereof in the warp, weft, and bias directions under a tension of 0.85 g/d.

Both surfaces of the heat-set fabric were coated with two biaxially stretched polyethylene terephthalate films, each having a thickness of 25 μm, through the same type of bonding agent layers as mentioned in Example 1, each layer having a thickness of 25 μm, and dried at 120°C for one minute by the same heat-pressing procedures as mentioned in Example 1, except that the pressure was 3.5 $kg/cm^2$.

The test results are shown in Tables 1, 2 and 3.

Example 5

A plain weave substrate fabric was produced from warps consisting of principal yarns which consisted of polyethylene terephthalate filaments having an individual filament denier of 5, and had a total denier of 500 and the same low elongation aromatic polyamide filament yarns as described in Example 1, distributed in a distribution density of one yarn/cm among the principal warp yarns, in a warp density of 5 yarns/cm, and wefts consisting of the same principal yarns as mentioned above in a weft density of 5 yarns/cm.

The content of the low elongation yarns in the substrate fabric was 28.6% by weight.

The substrate fabric was heat treated in the same manner as mentioned in Example 1.

The heat treated substrate fabric was laminated with two pieces of the same polyethylene terephthalate film as described in Example 4 in the same manner as described in Example 4.

The test results are shown in Table 3.

Comparative Examples 1 to 4

In Comparative Examples 1, 2, 3 and 4, the same procedures as those described respectively in Examples 1,

2, 3 and 4 were carried out, except that the low elongation yarns were replaced by the principal polyethylene terephthalate filament yarns.

The test results are shown in Tables 1, 2, and 3. In view of Tables 1, 2, and 3, it is clear that the elongation of the resultant comparative laminate sheet materials in Comparative Examples 1 to 4 are unsatisfactorily large compared with those in Examples 1 to 4.

Comparative Example 5

The same procedures as those described in Example 1 were carried out except that the substrate fabric consisted of the same low elongation aromatic polyamide filament yarns alone.

The test results are shown in Table 3.

It is clear from Table 3 that the resultant comparative laminate sheet material had a poor peeling strength and a significantly decreased seam strength.

Comparative Example 6

The same procedures as those described in Example 2 were carried out except that the substrate fabric consisted of a plain weave fabric composed of warp which consisted of 3,4'-diamino- diphenylether-copolymerized poly-p-phenyleneterephthalamide filament yarns having an individual filament denier of 1.5 and a total denier of 200, in a warp density of 64 yarns/2.54 cm and wefts which consisted of the same yarns as described above in a weft density of 42 yarns/2.54cm.

The test results are shown in Table 3.

Table 3 clearly indicates that the resultant comparative laminate sheet material had a very poor peeling strength and a very low seam strength.

Table 1

| Item \ Example No. | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Tensile strength (kg/5 cm) | Warp | 285.3 | 218.5 | 123.0 | 85.5 | 141.3 | 149.0 | 118.0 | 68.5 |
| | Weft | 115.3 | 202.3 | 258.3 | 201.3 | 114.2 | 139.0 | 105.0 | 79.2 |
| | Bias | 128.8 | 185.0 | 106.8 | 158.4 | 129.4 | 144.0 | 113.0 | 58.5 |
| Ultimate elongation (%) | Warp | 3.52 | 3.45 | 28.5 | 15.3 | 18.8 | 23.9 | 29.8 | 18.2 |
| | Weft | 22.5 | 3.67 | 3.58 | 3.85 | 21.3 | 26.3 | 42.0 | 16.2 |
| | Bias | 47.2 | 49.3 | 79.5 | 6.3 | 48.7 | 55.0 | 81.5 | 17.9 |

Table 2

| Item | | Example No. / Laminate | Example 1 Original | Example 1 Laundered | Example 2 Original | Example 2 Laundered | Example 3 Original | Example 3 Laundered | Example 4 Original | Example 4 Laundered | Comparative Example 1 Original | Comparative Example 1 Laundered | Comparative Example 2 Original | Comparative Example 2 Laundered | Comparative Example 3 Original | Comparative Example 3 Laundered | Comparative Example 4 Original | Comparative Example 4 Laundered |
|---|---|---|---|---|---|---|---|---|---|---|---|---|---|---|---|---|---|---|
| Elongation (%) under tensile load of: | 18.144 kg/ 5 cm | Warp | 0.63 | 0.72 | 0.65 | 0.73 | 1.04 | 2.75 | 1.08 | 2.62 | 0.81 | 2.88 | 0.84 | 2.36 | 1.13 | 2.85 | 1.01 | 2.12 |
| | | Weft | 1.02 | 3.28 | 0.72 | 0.82 | 0.66 | 0.71 | 0.77 | 0.92 | 1.14 | 3.15 | 1.30 | 2.87 | 1.50 | 3.45 | 1.22 | 2.44 |
| | | Bias | 1.35 | 3.64 | 1.64 | 2.85 | 1.49 | 3.08 | 0.95 | 1.33 | 1.28 | 3.54 | 1.65 | 2.91 | 1.58 | 3.43 | 1.43 | 2.84 |
| | 27.216 kg/ 5 cm | Warp | 0.84 | 0.88 | 0.85 | 0.91 | 1.78 | 3.64 | 2.03 | 4.48 | 1.10 | 3.56 | 1.31 | 3.19 | 1.83 | 3.55 | 2.22 | 4.36 |
| | | Weft | 2.22 | 4.34 | 0.92 | 0.99 | 0.88 | 0.92 | 0.91 | 1.22 | 2.11 | 4.19 | 2.13 | 4.06 | 2.83 | 5.21 | 2.01 | 4.16 |
| | | Bias | 2.82 | 7.05 | 3.05 | 6.21 | 3.36 | 6.85 | 1.85 | 2.44 | 2.63 | 6.84 | 3.16 | 5.81 | 3.46 | 6.65 | 3.10 | 6.48 |
| | 45.36 kg/ 5 cm | Warp | 1.28 | 1.35 | 1.35 | 1.44 | 4.45 | 9.03 | 13.52 | 21.85 | 2.80 | 7.21 | 3.10 | 7.25 | 4.58 | 9.25 | 14.05 | 23.85 |
| | | Weft | 7.25 | 13.54 | 1.42 | 1.67 | 1.35 | 1.55 | 1.48 | 1.79 | 7.20 | 15.25 | 6.50 | 14.35 | 9.40 | 17.43 | 10.46 | 20.58 |
| | | Bias | 12.78 | 26.81 | 9.63 | 20.58 | 12.55 | 23.85 | 3.50 | 4.73 | 12.60 | 25.50 | 10.05 | 22.35 | 12.70 | 26.78 | 13.75 | 26.58 |

Table 3

| Item / Example No. | | Peeling strength (kg/3 cm) | | Seam strength (kg/2.54 cm) | |
|---|---|---|---|---|---|
| | | Warp | Weft | Warp | Weft |
| Example | 1 | 2.8 | 2.6 | 83.4 | 84.5 |
| | 2 | 2.6 | 2.3 | 82.2 | 81.8 |
| | 3 | 2.6 | 2.2 | 65.8 | 62.5 |
| | 4 | 4.4 | 4.0 | 60.5 | 49.5 |
| | 5 | 4.8 | 4.2 | 33.5 | 41.0 |
| Comparative Example | 1 | 3.3 | 3.0 | 84.2 | 84.4 |
| | 2 | 3.1 | 2.7 | 83.3 | 82.5 |
| | 3 | 2.8 | 2.6 | 68.5 | 67.5 |
| | 4 | 5.2 | 4.8 | 62.0 | 50.5 |
| | 5 | 1.8 | 1.7 | 19.5 | 20.2 |
| | 6 | 1.2 | 1.0 | 21.5 | 20.2 |

Example 6

The same procedures as those described in Example 1 were carried out, with the following exception.

The plain weave substrate fabric consisted of warps consisting of principal yarns which consisted of polyethylene terephthalate filaments having an individual filament denier of 2.1 and had a total denier of 75, and low elongation yarns which consisted of 3,4'-diaminodiphenylether-copolymerized poly-p-phenylene- terephthalamide filaments made by Teijin Ltd. and having an individual filament denier of 1.5, had a total denier of 1,000 and distributed in a distribution density of one yarn/cm among the principal warp yarns, in a warp density of 110 yarns/2.54 cm, and weft consisting of the same principal polyethylene terephthalate filament yarns alone, as mentioned above, in a weft density of 96 yarns/2.54 cm.

The resultant substrate fabric contained 14.1% by weight of the low elongation yarns.

The scoured, dried substrate fabric was heat treated at a temperature of 190°C under a tension of 0.4 g/denier in the weft direction for one minute by means of a pin tester equipped with clips (made by Hirano Metal Works) while delivering the heat-treated fabric under a tension of 0.05 g/d in the warp direction.

The test results are shown in Tables 4 and 5.

Example 7

The same procedures as those described in Example 1 were carried out, with the following exception.

The plain weave substrate fabric consisted of warps consisting of principal polyethylene terephthalate filament yarns having an individual filament denier of 3 and a total denier of 150 and the same low elongation aromatic polyamide yarns as described in Example 6 distributed in a distribution density of one yarn/2 cm among the principal warp yarns, in a warp density of 55 yarns/2.54 cm, and wefts consisting of the same

principal yarns as mentioned above and the same low elongation yarns as mentioned above distributed in a distribution density of one yarn/2 cm among the principal weft yarns, in a weft density of 50 yarns/2.54 cm. The resultant substrate fabric contained 13.9% by weight of the low elongation yarns.

The scoured, dried substrate fabric was preset at a temperature of 180°C for 30 seconds, then dyed in the same manner as described in Example 4, and dried at a temperature of 120°C for one minute.

The dyed, dried substrate fabric was heat-treated by means of a pin tenter equipped with clips at a temperature of 180°C under tensions of 0.8 g/denier in the warp direction and of 0.6 g/denier in the weft direction for one minute, while the heat-treated fabric was delivered under a tension of 0.05 g/denier in the warp direction.

The test results are shown in Tables 4 and 5.

Example 8

The same procedures as described in Example 6 were carried out, with the following exception.

The plain weave substrate fabric was produced from warp consisting of principal polyethylene terephthalate filament yarns having an individual filament denier of 5 and a total denier of 125 and the same low elongation aromatic polyamide filament yarns as described in Example 6 distributed in a distribution density of 2 yarns/3 cm among the principal warp yarns, in a warp density of 64 yarns/2.54 cm, and wefts consisting of the same principal polyethylene terephthalate filament yarns as mentioned above, in a weft density of 50 yarns/2.54 cm, while a tension of 0.3 g/d was applied to the fabric in the warp direction.

The fabric was heat-treated by the same pin tenter as described in Example 6 at a temperature of 180°C under tensions of 0.3 g/denier in the warp direction and of 0.2 g/denier in the weft direction for 30 seconds,

while the fabric was delivered from the pin tenter under a tension of 0.05 g/denier in the warp direction.

The test results are indicated in Tables 4 and 5.

Comparative Example 7

The same procedures as those described in Example 6 were carried out except that the scoured, dried substrate fabric was heat-treated at a temperature of 140°C for one minute under tensions of 0.2 g/denier in the warp direction and of 0.1 g/denier in the weft direction.

The test results are indicated in Tables 4 and 5.

Comparative Example 8

The same procedures as those described in Example 7 were carried out except that the heat treatment applied to the dyed, dried substrate fabric was carried out at a temperature of 220°C for 30 seconds. During the heat treatment, the substrate fabric was ruptured and, therefore, a laminate sheet material could not be obtained therefrom.

Comparative Example 9

The same procedures as those described in Example 7 were carried out except that the heat-treated for the dyed, dried substrate fabric was carried out at a temperature of 180°C for one minute under tensions of 0.2 g/denier in the warp direction and of 0.1 g/denier in the weft direction.

The test results are shown in Tables 4 and 5.

Comparative Example 10

The same procedures as those described in Example 8 were carried out except that the heat treatment was omitted.

The test results are indicated in Tables 4 and 5.

Table 4

| Item \ Example No. | | Example 6 | Example 7 | Example 8 | Comparative Example 7 | Comparative Example 8 | Comparative Example 9 | Comparative Example 10 |
|---|---|---|---|---|---|---|---|---|
| Tensile strength (kg/5 cm) | Warp | 274.5 | 293.8 | 265.5 | 274.5 | Failed | 288.5 | 290.4 |
| | Weft | 110.9 | 265.3 | 115.3 | 110.0 | " | 264.3 | 268.5 |
| | Bias | 98.5 | 128.5 | 119.5 | 97.5 | " | 121.4 | 131.5 |
| Ultimate elongation (%) | Warp | 3.52 | 3.25 | 3.48 | 12.6 | " | 12.7 | 13.0 |
| | Weft | 42.0 | 3.58 | 22.0 | 43.2 | " | 26.3 | 27.5 |
| | Bias | 72.5 | 49.0 | 46.8 | 73.4 | " | 52.3 | 52.0 |

Table 5

| Item | | Example No. / Laminate | Example | | | | | | Comparative Example | | | | | | | |
|---|---|---|---|---|---|---|---|---|---|---|---|---|---|---|---|---|
| | | | 6 | | 7 | | 8 | | 7 | | 8 | | 9 | | 10 | |
| | | | Origi-nal | Laun-dered | Origi-nal | Laun-dered | Origi-nal | Laun-dered | Origi-nal | Laun-dered | Origi-nal | Laun-dered | Origi-nal | Laun-dered | Origi-nal | Laun-dered |
| Elon-gation under a tensile load of: (%) | 27.216 kg/ 5 cm | Warp | 0.91 | 0.95 | 0.84 | 0.91 | 0.88 | 0.92 | 1.85 | 2.05 | Failed | | 1.82 | 2.75 | 1.35 | 1.98 |
| | | Weft | 2.83 | 4.85 | 0.89 | 0.98 | 2.25 | 4.75 | 3.05 | 5.54 | " | | 2.32 | 3.02 | 2.46 | 4.78 |
| | | Bias | 3.46 | 8.15 | 3.21 | 6.41 | 3.12 | 7.21 | 3.85 | 8.65 | " | | 3.35 | 6.85 | 3.45 | 7.85 |
| | 45.36 kg/ 5 cm | Warp | 1.45 | 1.56 | 1.29 | 1.35 | 1.33 | 1.42 | 3.45 | 4.05 | " | | 3.35 | 3.83 | 3.85 | 4.25 |
| | | Weft | 9.40 | 14.85 | 1.38 | 1.42 | 7.52 | 14.05 | 11.25 | 16.55 | " | | 3.86 | 4.05 | 8.21 | 16.35 |
| | | Bias | 12.70 | 26.90 | 9.85 | 20.58 | 12.65 | 26.45 | 14.55 | 29.34 | " | | 10.53 | 22.35 | 13.55 | 25.85 |

CLAIMS

1. A laminate sheet material for sails, comprising a substrate fabric comprising 60 to 97% by weight of principal yarns and 3 to 40% by weight of low elongation yarns comprising high mechanical strength, high elastic modulus fibers and arranged in at least one direction, the substrate fabric having an elongation of 3.0% or less determined under a tensile load of 45.36 kg per 5 cm width thereof in at least one direction; and

at least one thermoplastic resin film bonded to at least one surface of the substrate fabric,

which laminate sheet material has an elongation of 1.5% or less determined under a tensile load of 45.36 kg per 5 cm width thereof, a peeling strength of 2.0 kg or more per 3 cm width thereof, and a seam strength of 25 kg or more per 2.54 cm width thereof.

2. The laminate sheet material as claimed in claim 1, wherein the high mechanical strength, high elastic modulus fibers have a tensile strength of 10 g/denier or more and an elastic modulus of 20 g/denier or more.

3. The laminate sheet material as claimed in claim 1, wherein the high mechanical strength, high elastic modulus fibers are selected from aromatic polyamide fibers, high strength polyethylene fibers, high strength polyvinyl alcohol fibers, high strength polyacrylonitrile fibers, polyimide fibers, carbon fibers and glass fibers.

4. The laminate sheet material as claimed in claim 1, wherein the high mechanical strength, high elastic modulus fiber yarns are arranged in a density of 1 to 9 yarns per 3 cm width of the substrate fabric, in one direction.

5. The laminate sheet material as claimed in claim 1, wherein the principal yarns consist of polyester fiber yarns.

6. The laminate sheet material as claimed in

claim 1, wherein the thermoplastic resin film comprises at least one member selected from the group consisting of polyvinyl chloride resins, polyvinylidene chloride resins, polyacrylic ester resins, polyethylene resins, polyester resins and polyamide resins.

7. The laminate sheet material as claimed in claim 1, wherein the thermoplastic resin film is a biaxially stretched polyethylene terephthalate resin film.

8. The laminate sheet material as claimed in claim 1, wherein the substrate fabric has a weight of 20 to 500 $g/m^2$.

9. The laminate sheet material as claimed in claim 1, wherein the thermoplastic resin film has a thickness of 10 to 200 μm.

10. The laminate sheet material as claimed in claim 1, wherein the substrate sheet is bonded to the thermoplastic resin film through a heat-bonding thermoplastic resin layer.

11. The laminate sheet material as claimed in claim 1, wherein the heat-bonding thermoplastic resin layer is in dry thickness of from 5 to 200 μm.

12. A process for producing a laminate sheet material for sails, comprising the steps of:

dry heat-treating a substrate fabric comprising 60% to 97% by weight of principal yarns and 3 to 40% by weight of low elongation yarns comprising high mechanical strength, high elastic modulus fibers arranged in at least one direction, at a temperature of 50°C to 110°C below the melting point of the principal yarns under a tension of 0.3 g/denier in the direction in which the low elongation yarns are arranged; and

bonding at least one thermoplastic resin film to at least one surface of the substrate fabric.

13. The process as claimed in claim 12, wherein the high mechanical strength, high elastic modulus fibers have a tensile strength of 10 g/denier or more

and an elastic modulus of 20 g/denier.

14. The process as claimed in claim 12, wherein the bonding step of the thermoplastic resin film is applied to the dry heat-treated substrate fabric.

15. The process as claimed in claim 12, wherein the principal yarns consist of polyester fiber yarns.

16. The process as claimed in claim 12, wherein the reinforcing yarns are arranged in a density of 1 to 9 yarns per 3 cm width of the substrate fabric.

0222610

Fig. 1

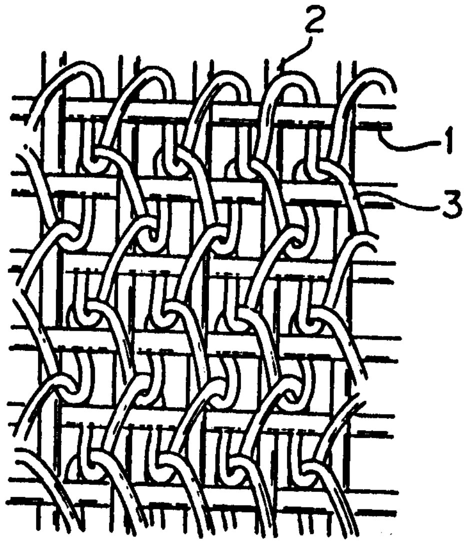


Fig. 2